# FASCICULE DE BREVET EUROPEEN

(11) **EP 4 173 274 B1**
(45) Date de publication et mention de la délivrance du brevet: **11.09.2024**
(21) Numéro de dépôt: 21743551.0
(22) Date de dépôt: 23.06.2021
(51) Int. Cl.: H04M 3/523

(54) **PROCÉDÉ ET SERVEUR DE TRAITEMENT D'APPELS EN PROVENANCE DE TERMINAUX D'UTILISATEURS POUR LA MISE EN RELATION AVEC DES TERMINAUX D'OPÉRATEURS**
VERFAHREN UND SERVER ZUR VERARBEITUNG VON ANRUFEN AUS BENUTZERENDGERÄTEN ZUR VERBINDUNG MIT BEDIENERENDGERÄTEN
METHOD AND SERVER FOR PROCESSING CALLS ORIGINATING FROM USER TERMINALS FOR CONNECTION WITH OPERATOR TERMINALS

(30) Priorité: 24.06.2020 FR 2006634
(43) Date de publication de la demande: 03.05.2023
(73) Titulaire: Orange, 92130 Issy-les-Moulineaux (FR)
(72) Inventeur: KOUNTOURIS, Apostolos, 92326 CHÂTILLON CEDEX (FR)
(86) Numéro de dépôt international: PCT/FR2021/051155
(87) Numéro de publication internationale: WO 2021/260329

(56) Documents cités:
- US-A1- 2007 130 313
- US-A1- 2017 054 849
- US-B1- 8 472 612
- US-B1- 9 065 915

## Description

### Domaine technique

La présente invention a trait de manière générale au domaine des réseaux de télécommunications, et concerne notamment le traitement des appels reçus en provenance de terminaux d'utilisateurs, via des réseaux de télécommunications, dans des centres d'appels fournissant des services.

### État de la technique

Un centre d'appels (*call center* en anglais) est une infrastructure ou plateforme principalement constituée de moyens techniques et immobiliers (bureaux) et gérée par des personnes, parmi lesquelles certaines, souvent appelées opérateurs ou conseillers, sont mises en relation avec des clients ou utilisateurs pour leur fournir une aide, des conseils, concernant la vente ou l'après-vente (SAV) de services ou produits commercialisés, ou bien une aide à l'utilisation de produits (*help desk*)*.*

Les conseillers ou opérateurs sont généralement répartis dans des espaces de bureaux disposant de terminaux de communication - par exemple des ordinateurs de bureau associés à des terminaux de téléphonie -, et où sont distribués des appels téléphoniques, mais aussi des courriels (*emails*), des messages courts (SMS), etc. Ces appels peuvent être qualifiés d'entrants, lorsqu'ils sont reçus par les opérateurs du centre, en provenance des clients ou utilisateurs, ou à l'inverse de sortants lorsqu'ils sont émis par les opérateurs. Généralement, les appels téléphoniques entrants sont reçus dans une plateforme serveur chargée de les router aux terminaux des opérateurs en fonction de la disponibilité de ces derniers, et de l'ordre d'arrivée des appels entrants. À cet effet, lorsque tous les opérateurs sont occupés, les appels entrant sont placés selon leur d'ordre d'arrivée dans une file d'attente de type FIFO (*First In, First Out*) gérée par la plateforme serveur. Cette plateforme serveur est par ailleurs généralement équipée d'un serveur vocal interactif, proposant vocalement aux utilisateurs un certain nombre d'options pour le traitement de leurs appels, notamment lorsque tous les terminaux des opérateurs sont déjà occupés.

Parmi les options connues pour traiter un appel entrant lorsqu'aucun opérateur n'est disponible, celle désignée par "fonction de rappel" (*call back* en anglais) consiste à proposer à l'utilisateur appelant de le rappeler automatiquement lorsqu'un opérateur sera disponible.

Concernant la fonction de rappel, le document de brevet EP1465398A1 décrit un serveur de contrôle d'appel fonctionnant pour recevoir des appels de terminaux d'utilisateurs et pour organiser la connexion des appels à des terminaux d'opérateurs. Le serveur de contrôle d'appel comprend un processeur de file d'attente chargé de placer des appels dans une file d'attente en attendant d'être connectés à l'un des terminaux d'opérateurs. Le serveur de contrôle d'appel est apte à déterminer, selon un temps d'attente courant pour les appels dans la file d'attente, une heure probable de rappel (*call back*) à laquelle le serveur de contrôle d'appel pourra connecter un terminal opérateur à un terminal utilisateur considéré, puis à communiquer l'heure de rappel au terminal utilisateur. En réponse à l'acceptation de l'heure de rappel par l'utilisateur, le serveur de commande d'appel déclenchera un appel vers l'utilisateur à l'heure de rappel afin de connecter le terminal de l'utilisateur à un terminal opérateur.

La fonction de rappel (*call back*) évoquée ci-dessus est avantageuse car elle permet à l'utilisateur de pouvoir raccrocher sans devoir attendre en restant à l'écoute d'un serveur vocal, que son appel soit pris en compte par un opérateur ; elle permet donc à l'utilisateur de gagner du temps et aussi de l'argent puisque le temps de communication est écourté. Cependant, l'utilisateur doit rester à proximité de son terminal de communication ou garder son terminal sur lui (dans le cas d'un téléphone mobile par exemple) ce qui est contraignant, et cela d'autant plus que le temps d'attente pour le rappel est long. Par ailleurs, il se peut qu'au moment du rappel, l'utilisateur ne soit plus disponible pour prendre l'appel, ce qui lui fait perdre sa place dans la file d'attente.

Le document US 8472612 présente une solution de file d'attente dans laquelle l'appelant reçoit un code d'accès qui, lorsqu'il rappelle, lui permet de conserver sa position dans la file d'attente.

La présente invention vise notamment à améliorer la situation exposée ci-dessus.

### Exposé de l'invention

La présente invention propose, selon un premier aspect, un procédé de traitement d'un premier appel reçu dans un centre d'appels via un réseau de télécommunications, en provenance d'un terminal d'utilisateur, comprenant le placement du premier appel dans une file d'attente lorsqu'aucun terminal d'opérateur du centre d'appels n'est disponible pour prendre le premier appel. Conformément à l'invention ce procédé est remarquable en ce qu'il comprend :
- la transmission au terminal de l'utilisateur d'un code d'identification d'utilisateur (CIU), ledit code étant créé et placé lors du premier appel dans la file d'attente à la place d'un identifiant du premier appel et devant être obtenu lors d'un second appel devant être effectué ultérieurement par l'utilisateur, dans un intervalle de temps (INT) déterminé de manière à permettre au second appel de bénéficier de la place du premier appel dans la file d'attente.

Grâce au procédé tel que succinctement défini ci-dessus, l'utilisateur dont l'appel est en file d'attente, une fois le code d'identification obtenu, peut raccrocher et n'a pas à attendre qu'on le rappelle comme c'est le cas avec la fonction de rappel (*call back*) connue, puisque c'est lui qui doit rappeler ultérieurement le centre d'appels, de préférence dans l'intervalle de temps qui lui est donné, en communiquant son code d'identification pour pouvoir bénéficier de sa place initiale (obtenue lors du premier appel) dans la file d'attente.

Selon une mise en oeuvre particulière du procédé, ledit code est fourni par l'utilisateur lors du second appel.

Selon une mise en oeuvre particulière, le procédé comprend :
- la transmission au terminal de l'utilisateur d'un message d'information indiquant à l'utilisateur la possibilité d'effectuer le second appel dans l'intervalle de temps (INT), tout en bénéficiant de la place du premier appel dans la file d'attente ;
- suite à la réception d'un message d'approbation en provenance du terminal d'utilisateur, la transmission au terminal d'utilisateur du code d'identification d'utilisateur (CIU) devant être obtenu lors du second appel afin que le second appel puisse bénéficier de la place du premier appel dans la file d'attente.

Cette mise en oeuvre offre la possibilité à l'utilisateur d'accepter ou non l'option proposée par le serveur, selon laquelle l'utilisateur peut rappeler ultérieurement le serveur en utilisant un code spécifique lui permettant de conserver sa place initiale (la place du premier appel) dans la file d'attente, à condition toutefois de respecter l'intervalle de temps (INT) communiqué pour effectuer le second appel.

Selon un mode de réalisation du procédé, lors du premier appel, le code d'identification d'utilisateur (CIU) est créé et est placé dans la file d'attente à la place d'un identifiant du premier appel.

Un tel identifiant est par exemple le numéro de téléphone associé au terminal de l'utilisateur avec lequel le premier appel a été effectué. De cette façon, lorsque l'utilisateur rappelle le centre d'appels et communique son code d'identification, celui-ci est recherché dans la file d'attente et la place correspondante est affectée à l'utilisateur qui récupère ainsi sa place initiale.

Selon un mode de réalisation, le procédé comprend :
- l'estimation en fonction de l'état de la file d'attente, pour le premier appel, d'une durée d'attente (DATE) avant mise en relation du terminal d'utilisateur avec un terminal d'opérateur ; et
- si la durée d'attente (DATE) dépasse une valeur seuil, la transmission du message d'information susmentionné au terminal d'utilisateur.

Le message d'information n'est ainsi envoyé à l'utilisateur que si la durée d'attente est supérieure à une valeur déterminée, par exemple cinq minutes, ce qui permet de limiter le risque qu'un rappel de l'utilisateur intervienne après que le code de l'utilisateur a été supprimé de la liste d'attente.

Selon une caractéristique de réalisation particulière, l'intervalle de temps pour effectuer le second appel est compris entre l'instant de réception du premier appel (t0) et l'instant (t_{DATE}) correspondant à l'instant de réception du premier appel auquel est ajoutée la durée d'attente estimée (DATE).

De cette façon, si l'utilisateur effectue son second appel dans l'intervalle de temps susmentionné, le risque que sa place dans la file d'attente soit perdue est minimisé.

Selon une caractéristique de réalisation particulière, l'intervalle de temps pour effectuer le second appel est une période fixée de temps, strictement inférieure à la durée d'attente estimée (DATE), pendant laquelle le second appel bénéficiera de la place du premier appel dans la file d'attente.

Cela permet de limiter le risque pour l'utilisateur de perdre sa place dans la file d'attente, si par exemple le temps moyen de mise en relation avec un opérateur est surestimé pour le calcul de la durée d'attente, ou si d'autres utilisateurs dans la file d'attente n'effectuent pas leur second appel, ce qui pourrait amener le code de l'utilisateur à être en tête de file et de perdre sa place si l'utilisateur ne rappelle pas à temps.

Selon un mode de réalisation particulier, le procédé comprend suite à la réception du second appel de l'utilisateur :
- la recherche dans la file d'attente du code d'identification d'utilisateur (CIU) communiqué par l'utilisateur ;
- l'attente de la mise en relation du terminal d'utilisateur avec un terminal d'opérateur, lorsque la place dans la file d'attente est proche de la tête de la file ;
- la création d'un second code d'identification de l'utilisateur et placement du second code en queue de la file d'attente, lorsque le code d'identification de l'utilisateur n'est plus dans la file d'attente.

Selon le mode de réalisation ci-dessus, si le code de l'utilisateur n'est plus dans la file d'attente - en pratique le code est indiqué comme étant expiré -, alors le second code créé pour l'utilisateur permet à ce dernier de recommencer le processus de traitement avec ce second code au cours d'un appel ultérieur (un troisième appel de l'utilisateur).

Selon une mise en oeuvre particulière du procédé, le second d'identification créé est égal au code d'identification de l'utilisateur

Ainsi, pour un utilisateur et/ou un terminal d'utilisateur considéré, le code d'identification initialement généré restera affecté à l'utilisateur, ce qui évitera à l'utilisateur d'avoir à en recevoir et, le cas échéant à en retenir, un nouveau.

Selon un mode de réalisation, le procédé comprend une action de surveillance de la file d'attente d'appels d'utilisateurs, au cours de laquelle, si un code d'identification d'utilisateur arrive en tête de file et qu'aucun second appel avec ce code n'a été reçu, une commande parmi les suivantes est exécutée :
- rétrograder le code d'identification dans la file d'attente d'un nombre déterminé de places ;
- placer le code d'identification en queue de file d'attente ;
- supprimer le code d'identification de la file d'attente.

Avec cette action de surveillance de la file d'attente, il est ainsi possible d'appliquer une commande déterminée selon une stratégie de traitement prédéfinie, lorsqu'un code d'identification d'un utilisateur arrive en tête de file sans qu'aucun second appel avec ce code n'ait été encore reçu. Selon un second aspect, la présence invention concerne un serveur de télécommunications destiné à traiter des appels en provenance de terminaux d'utilisateurs via un réseau de télécommunications afin de mettre en relation les terminaux d'utilisateurs avec des terminaux d'opérateurs d'un centre d'appels ; le serveur est configuré pour placer un premier appel reçu en provenance d'un terminal d'utilisateur dans une file d'attente lorsqu'aucun terminal d'opérateur n'est disponible pour prendre le premier appel. Selon l'invention ce serveur comprend une unité de traitement d'appels configurée pour :
- transmettre au terminal de l'utilisateur un code d'identification d'utilisateur (CIU), ledit code étant créé et placé lors du premier appel dans la file d'attente à la place d'un identifiant du premier appel et étant obtenu lors d'un second appel devant être effectué ultérieurement par l'utilisateur, dans un intervalle de temps (INT) déterminé de manière à permettre au second appel de bénéficier de la place du premier appel dans la file d'attente.

Selon un mode de réalisation l'unité de traitement d'appels du serveur est configurée pour :
- transmettre au terminal de l'utilisateur un message d'information indiquant à l'utilisateur la possibilité d'effectuer le second appel dans l'intervalle de temps (INT) déterminé, tout en bénéficiant de la place du premier appel dans la file d'attente ;
- suite à la réception d'un message d'approbation en provenance du terminal d'utilisateur, transmettre au terminal d'utilisateur le code d'identification d'utilisateur (CIU) devant être obtenu lors du second appel afin que le second appel puisse bénéficier de la place du premier appel dans la file d'attente.

Selon un troisième aspect, la présence invention concerne un programme d'ordinateur mis en oeuvre dans un serveur de télécommunications, ce programme comprenant des instructions dont l'exécution par un processeur du serveur, provoque l'exécution des étapes d'un procédé de traitement d'un premier appel reçu dans un centre d'appels, tel que défini supra.

Un tel programme peut utiliser n'importe quel langage de programmation, et comprendre un ou plusieurs programmes sous forme de code source, code objet, ou de code intermédiaire entre code source et code objet, tel que dans une forme partiellement compilée, ou dans n'importe quelle autre forme souhaitable.

Selon un quatrième aspect, l'invention concerne un terminal de communication apte à réaliser un premier appel vers un centre d'appels, dans lequel est installée une application logicielle adaptée à communiquer avec un serveur de télécommunications tel que défini plus haut, cette application étant configurée pour :
- recevoir un code d'identification d'utilisateur issu du serveur de télécommunications lors du premier appel réalisé vers le centre d'appels ;
- mémoriser le code d'identification d'utilisateur reçu ;
- transmettre le code d'identification d'utilisateur automatiquement audit serveur, lors du second appel réalisé par le terminal de communication vers le centre d'appels.

L'invention vise aussi un terminal tel que défini ci-dessus, apte de surcroît à recevoir un message d'information en provenance du serveur de télécommunications indiquant à l'utilisateur la possibilité d'effectuer un second appel dans un intervalle de temps, et apte à transmettre au serveur de télécommunications un message d'approbation.

L'invention vise aussi par conséquent, selon un dernier aspect, un support d'enregistrement d'informations lisible par un ordinateur, sur lequel est stocké un programme d'ordinateur tel qu'exposé ci-dessus. Un tel support d'enregistrement peut être constitué par n'importe quel dispositif capable de stocker un tel programme d'ordinateur. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un programme d'ordinateur selon l'invention peut être en particulier téléchargé sur un réseau de type Internet.

Les avantages procurés par un serveur, un terminal et un programme d'ordinateur, tels que brièvement définis ci-dessus, sont identiques ou contribuent à ceux mentionnés plus haut en relation avec le procédé de traitement d'un premier appel dans un centre d'appels, selon l'invention, et ne seront par conséquent pas rappelés ici.

### Brève description des dessins

D'autres caractéristiques, détails et avantages apparaîtront à la lecture de la description détaillée ci-après, et à l'analyse des dessins annexés, sur lesquels :
- La figure 1 illustre un exemple d'environnement de télécommunications dans lequel le procédé selon l'invention peut être est mis en oeuvre,
- La figure 2 représente les modules fonctionnels d'un serveur de traitement d'appels d'un centre d'appels, configuré pour mettre en oeuvre un procédé de traitement d'appels selon l'invention; et
- La figure 3 représente, sous forme d'organigramme, les principales étapes d'un procédé de traitement d'un appel reçu dans un centre d'appels via un réseau de télécommunications, en provenance d'un terminal d'utilisateur, selon un mode de réalisation de l'invention.

### Description détaillée

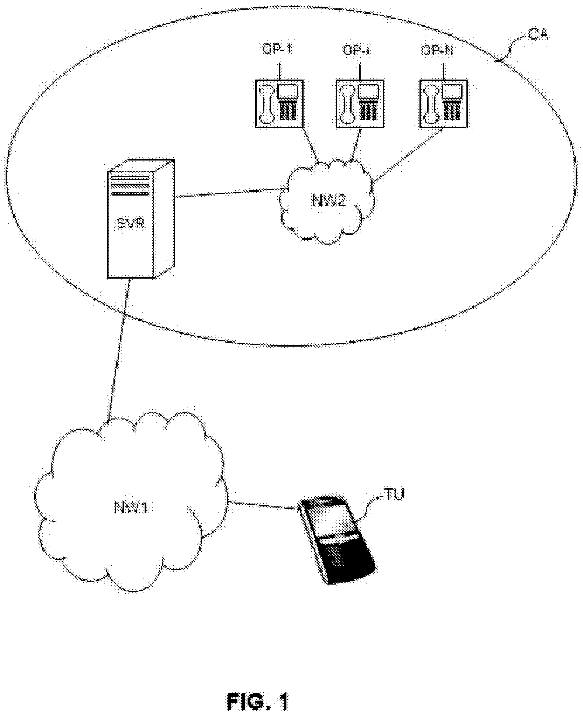

La **figure 1** illustre un exemple d'environnement de télécommunications dans lequel le procédé selon l'invention peut être est mis en oeuvre. L'environnement représenté comprend un terminal de communication TU, tel qu'un téléphone mobile de type *smartphone,* d'un utilisateur, relié à un réseau de téléphonie mobile (3G, 4G, ...) non représenté, donnant accès à un premier réseau NW1 de type Internet, auquel est également connecté un serveur SVR de traitement d'appels d'un centre d'appels CA (*call center*) comprenant un ensemble de N terminaux d'opérateurs OP-1 à OP-N connectés à un réseau NW2, par exemple un réseau IP (*Internet Protocol*) tel qu'un intranet d'entreprise. Ce centre d'appels est par exemple associé à un service après-vente d'une société commerciale.

Comme exposé plus haut, il est proposé selon la présente invention un procédé de traitement d'un premier appel reçu dans un centre d'appels via un réseau de télécommunications, en provenance d'un terminal d'utilisateur. Ce procédé comprend notamment le placement du premier appel dans une file d'attente lorsqu'aucun terminal d'opérateur du centre d'appels n'est disponible pour prendre le premier appel, et la transmission au terminal de l'utilisateur d'un message d'information indiquant à l'utilisateur la possibilité d'effectuer un second appel dans un intervalle de temps (INT) déterminé, tout en bénéficiant de la place du premier appel dans la file d'attente ; enfin, suite à la réception d'un message d'approbation en provenance du terminal d'utilisateur, la transmission au terminal d'utilisateur d'un code d'identification d'utilisateur (CIU), ce code devant être fourni par l'utilisateur lors du second appel afin que le second appel puisse bénéficier de la place du premier appel dans la file d'attente. Dans le cadre de la présente description, la mise en oeuvre du procédé d'appels selon l'invention, tel que brièvement résumé ci-dessus, est désignée par "service d'appel différé" (SAD); cette mise en oeuvre repose essentiellement sur une unité de traitement d'appels, en pratique un élément essentiellement de nature logicielle, incorporé dans le serveur SVR.

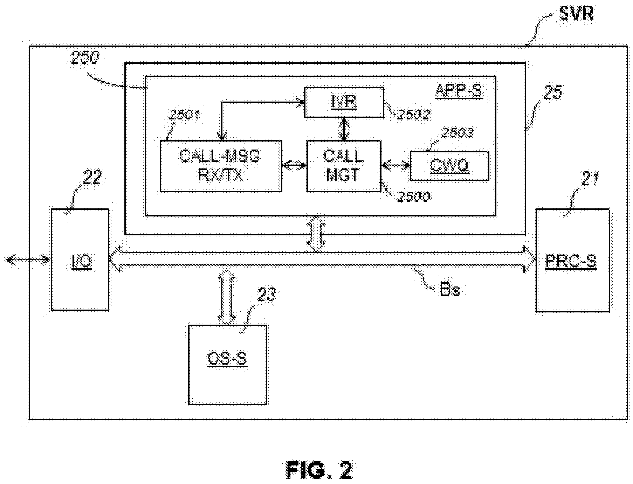

La **figure 2** représente les modules fonctionnels d'un serveur de traitement d'appels d'un centre d'appels, configuré pour mettre en oeuvre un procédé de traitement d'appels selon l'invention. Comme illustré sur la figure 2, le serveur SVR est également constitué d'éléments agencés selon une architecture matérielle classique d'ordinateur, comprenant notamment un processeur (PRC-S) 21 et une mémoire 25 comprenant des composants mémoire de type ROM et RAM et communiquant par l'intermédiaire d'un ensemble de bus de données (Bs).

D'un point de vue fonctionnel le serveur SVR inclut en particulier les modules fonctionnels détaillés ci-après :
- Un module (I/O) 22 d'interface de communication réseau, configuré pour communiquer, via le réseau NW1 avec des terminaux d'utilisateurs tels que le terminal TU, et via le réseau NW2 avec des terminaux d'opérateurs (ou conseillers) OP-i du centre d'appels. À cet effet, le module d'interface réseau 22 du serveur peut utiliser divers protocoles de communication tels que par exemple un protocole de type HTTP (*HyperText Transfer Protocol*), HTTPS (*HyperText Transfer Protocol Secure*) ou SIP (*Session Initiation Protoco*/).
- Un module système d'exploitation (OS-S) 23, par exemple le système d'exploitation Linux ou UNIX, gérant l'interaction entre les différents modules du serveur et le processeur (PRC-S).
- L'unité de traitement d'appels susmentionnée (APP-S) 250, enregistrée dans la mémoire 25, et comprenant notamment un module 2500 (CALL MGT) de gestion d'appels entrants provenant de terminaux d'utilisateurs, coopérant en particulier avec un module 2501 de réception/transmission de messages et d'appels (CALL-MSG RX/TX), un module 2502 serveur vocal interactif (IVR - *Interactive Voice Response*) chargé d'établir un dialogue interactif avec un utilisateur lors d'un appel entrant, et une structure de données agencée pour fournir une file d'attente (CWQ - *Call Waiting Queue*) de type FIFO (*First In First Out*) d'appels entrants en provenance de terminaux d'utilisateurs (TU).

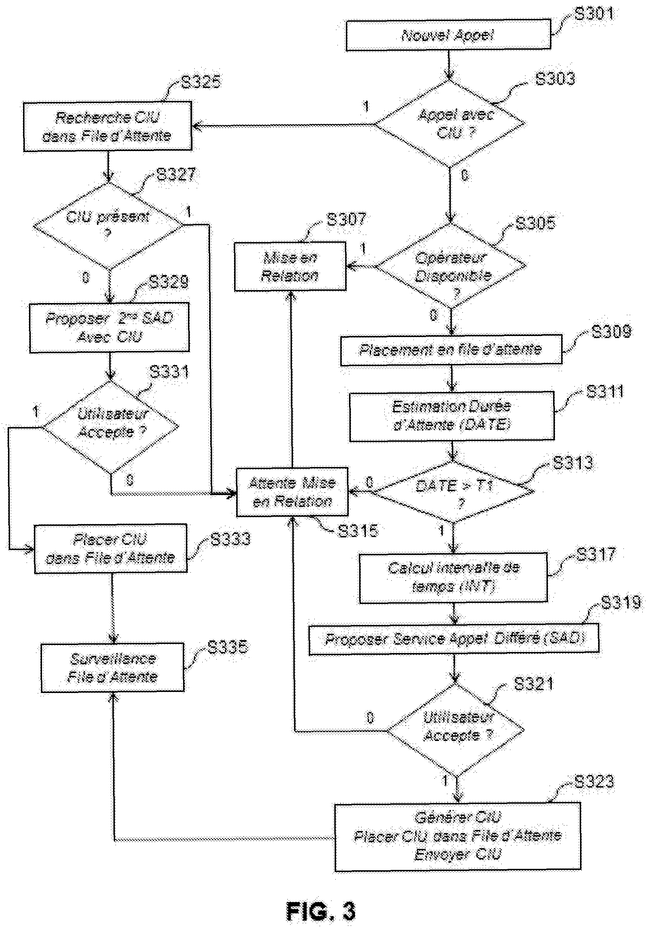

En liaison avec la **figure 3** on va à présent détailler, selon un exemple de mise en oeuvre, les étapes principales du procédé de traitement d'un appel reçu dans un centre d'appels, selon l'invention. Dans cet exemple, le procédé est mis en oeuvre dans l'environnement de la figure 1 et par le serveur de traitement d'appels décrit en relation avec la figure 2.

Comme représenté à la figure 3, le procédé débute par une étape de réception **S301** d'un nouvel appel entrant en provenance d'un terminal d'utilisateur TU. À l'étape suivante **S303,** l'unité de traitement 250 (module 2500) du serveur détermine si cet appel est associé à un code d'identification d'utilisateur (CIU) ; autrement dit, l'unité 250 détermine s'il s'agit ou non d'un deuxième appel pour lequel le correspondant (l'utilisateur du terminal TU) a fourni un code CIU, par exemple en prononçant le code au cours du dialogue avec le serveur vocal interactif (IVR 2502). Si c'est le cas ("1"), on passe à l'étape S325 décrite plus bas ; dans le cas contraire ("0"), il s'agit donc d'un premier appel et l'on passe à l'étape S305.

L'étape **S305** est une étape de test au cours de laquelle, le module de gestion d'appels 2500 consulte la file d'attente 2503 pour déterminer si un opérateur est disponible pour prendre l'appel entrant. Si c'est le cas ("1") l'appel est connecté, à l'étape **S307,** avec un terminal OP-i d'un opérateur et l'utilisateur est mis en relation avec l'opérateur.

Dans le cas contraire, c'est-à-dire si des appels précédents sont déjà dans la file d'attente, alors le nouvel appel est placé en queue de file d'attente, à l'étape **S309.** En pratique, selon un exemple de réalisation, l'appel est identifié dans la file d'attente par le numéro de téléphone associé à l'appel ; dans le cas d'un appel émis par un terminal de téléphonie mobile, il s'agira d'un numéro MSISDN (*Mobile Station ISDN Number*) stocké dans une carte SIM (*Subscriber Identity Module*) incorporée dans le terminal (TU) de l'appelant.

À l'étape **S311** qui suit, le module de gestion d'appels (2500) effectue une estimation de la durée d'attente (DATE) en fonction de l'état de la file d'attente, c'est-à-dire du nombre d'appels entrants déjà en attente. À l'étape **S313,** la durée d'attente estimée (DATE) est comparée à une valeur prédéfinie (T1), de seuil, en dessous de laquelle il n'est pas jugé opportun de proposer le service d'appel différé (SAD) à l'utilisateur. Cette valeur de seuil T1 est par exemple paramétrée à cinq minutes, ce qui permet de limiter le risque qu'un rappel de l'utilisateur intervienne après qu'un code fourni à l'utilisateur a été supprimé de la liste d'attente, compte tenu de l'imprécision sur l'estimation de la durée d'attente, cette imprécision étant notamment due à la variabilité de la durée d'une communication entre un appelant et un opérateur. Ainsi, si la durée d'attente estimée (DATE) est inférieure à la valeur seuil T1 ("0"), il est indiqué à l'appelant d'attendre la mise en relation avec un opérateur **(S315).**

Si à l'étape 5313 ("1"), l'estimation de la durée d'attente est supérieure à la valeur seuil T1, à l'étape **S317** qui suit, il est calculé un intervalle de temps (INT) qui sera communiqué à l'utilisateur pour effectuer, dans le cadre du service d'appel différé (SAD), le second appel. Selon un exemple de réalisation, l'intervalle de temps (INT) est déterminé comme étant la durée comprise entre l'instant (t0) de réception du premier appel (appel initial) et l'instant (t_{DATE}) correspondant à l'instant de réception du premier appel auquel est ajoutée la durée d'attente estimée (DATE). De cette façon, si l'utilisateur effectue son second appel dans l'intervalle de temps INT, le risque que sa place dans la file d'attente soit perdue lorsqu'il effectuera le second appel est minimisé. Plus simplement, selon un autre exemple, l'intervalle de temps INT peut être déterminé comme étant une période de temps, strictement inférieure à la durée d'attente estimée (DATE), pendant laquelle le second appel bénéficiera de la place du premier appel dans la file d'attente ; on pourra par exemple définir l'intervalle de temps INT comme étant la durée d'attente estimée (DATE) à laquelle on retranche trois minutes.

À l'étape **S319,** le serveur vocal interactif (IVR) annonce le temps d'attente estimé à l'utilisateur et lui propose le service d'appel différé (SAD). À l'étape **S321,** si l'utilisateur refuse l'appel différé et choisit d'attendre ("0"), son appel est conservé dans la file d'attente avant mise en relation avec un opérateur (S315).

Au contraire, si l'utilisateur accepte le service d'appel différé (S321, "1"), on passe à l'étape **S323** au cours de laquelle un code d'identification de l'utilisateur (CUI) est généré par le module de gestion d'appels (2500), le code généré est enregistré dans la file d'attente à la place du numéro correspondant à l'appel initial (premier appel), et le code CIU est transmis à l'utilisateur. Selon un exemple de réalisation, le code CUI est un code alphanumérique transmis vocalement (via le serveur vocal interactif) à l'utilisateur. Il est possible de prévoir alternativement ou en addition l'envoi du code CUI sous la forme d'un message de type SMS (*Short Message Service*)*.*

Au cours de l'étape suivante, **S335,** le module de gestion d'appels (2500) effectue une surveillance de la file d'attente au cours de laquelle, pour chaque code d'identification d'utilisateur (CUI) placé dans la file d'attente, la place du code CUI est vérifiée de sorte que, si un code d'identification d'utilisateur arrive en tête de file et qu'aucun second appel selon le service d'appel différé (SAD) avec ce code n'a été reçu, une commande selon les options suivantes est exécutée, le choix de l'option dépendant de l'implémentation du procédé considérée :
- (i) rétrograder le code d'identification dans la file d'attente d'un nombre déterminé de places ; ou,
- (ii) placer le code d'identification en queue de file d'attente ; ou,
- (iii) supprimer le code d'identification de la file d'attente.

L'option (i) pourra être mise en oeuvre pendant une durée déterminée, par exemple deux heures maximum après le premier appel, afin de conserver une place intermédiaire dans la file d'attente pour l"utilisateur disposant du code. Par exemple, le nombre de place pourra être déterminé comme étant celui permettant au code à rétrograder d'être situé en milieu de queue. L'option (ii) permettra à l'utilisateur de conserver son code dans la file d'attente - par exemple pour une durée maximale fixée à deux heures comme dans l'option (i) - s'il rappelle après l'expiration de l'intervalle de temps INT mentionné plus haut. Enfin, l'option (iii) obligera l'utilisateur a recommencé le processus d'appel depuis le début s'il n'effectue pas son second appel selon le service d'appel différé, dans l'intervalle de temps INT qui lui a été communiqué (étape 5319).

De retour à l'étape **S303** ("1"), lors d'un nouvel appel reçu (S301), si l'unité de traitement (250) du serveur de traitement d'appels détermine que l'appel reçu est associé à un code d'identification d'utilisateur (CIU) fourni par l'utilisateur, par exemple vocalement lors du dialogue avec le serveur vocal interactif (2502), alors cela signifie que ce nouvel appel est un "deuxième appel" effectué par l'appelant (l'utilisateur du terminal TU) selon le service d'appel différé. Dans ce cas, à l'étape **S325,** le module de gestion d'appels (2500) recherche le code CIU fourni par l'utilisateur dans la file d'attente (2503). À l'étape **S327** ("1") si le code CIU est toujours dans la file d'attente, alors l'appel en cours sera placé en attente de mise en relation (étape S315) avec un terminal d'opérateur, jusqu'à ce que le code CIU de l'utilisateur arrive en tête de file et que l'appel soit connecté (S307) à un terminal d'un opérateur disponible. On notera ici qu'à l'étape S327 si le code CIU de l'utilisateur est toujours dans la file d'attente mais qu'il est situé à une place distante de la tête de file, par exemple parce que le code aura été rétrogradé selon l'option (i) exposée plus haut, alors il pourra être proposé à l'utilisateur un second code CIU comme exposé ci-après en relation avec l'étape 5329 (mécanisme non représenté sur la figure 3 dans un but de simplification).

Toujours à l'étape S327, si le code CIU fourni par l'utilisateur n'est pas trouvé dans la file d'attente (S327, "0"), alors à l'étape **S329,** une nouvelle proposition de service d'appel différé (SAD) avec un nouveau code CIU (second code CIU) est faite à l'utilisateur. Si l'utilisateur refuse **(S331,** "0") alors l'appelant est invité à attendre la mise en relation avec un opérateur (S315). En revanche, si l'utilisateur accepte à nouveau le service d'appel différé (S331, "1") un nouveau code (second code CIU) est généré, enregistré dans la file d'attente en queue de file, à l'étape **S333,** puis est communiqué à l'utilisateur avec un intervalle de temps INT associé, calculé comme expliqué plus haut (étape S317). L'étape **(S335)** de surveillance de la file d'attente est alors mise en oeuvre comme exposé plus haut.

Il est à noter qu'à la figure 3, un "second" code CIU n'est pas mentionné. En effet, selon le mode de réalisation illustré par la figure 3, le second code CIU est choisi comme étant identique au premier code CIU. De cette façon il n'est pas nécessaire de générer un nouveau code et de le communiquer à l'utilisateur, ce qui simplifie le processus, et par ailleurs, il n'est nul besoin pour l'utilisateur de retenir un nouveau code, ce qui est avantageux pour ce dernier.

Selon une variante d'implémentation du procédé selon l'invention, le code CIU attribué à l'utilisateur, est associé au numéro de téléphone du terminal de l'utilisateur dans une table d'association mémorisée dans le serveur, et lors du second appel, le code CIU est automatiquement obtenu à partir du numéro de téléphone de l'utilisateur.

Selon une autre variante, une application de communication adaptée à communiquer avec le centre d'appels (CA) est préalablement installée dans le terminal de l'utilisateur et mémorise le code CIU de l'utilisateur lorsqu'il est transmis par le serveur de télécommunications (SVR). Le code CIU est alors automatiquement transmis par l'application de communication du terminal au serveur, lors du deuxième appel de l'utilisateur au centre d'appels.

## Revendications

1. Procédé de traitement d'un premier appel reçu dans un centre d'appels (CA) via un réseau de télécommunications (NW1), en provenance d'un terminal d'utilisateur (TU), comprenant le placement (S309) du premier appel dans une file d'attente lorsqu'aucun terminal d'opérateur du centre d'appels n'est disponible pour prendre le premier appel, ledit procédé étant **caractérisé en ce qu'**il comprend :
- la transmission (S323) au terminal de l'utilisateur d'un code d'identification d'utilisateur (CIU), ledit code étant créé et placé lors du premier appel dans la file d'attente à la place d'un identifiant du premier appel et étant obtenu lors d'un second appel devant être effectué ultérieurement par l'utilisateur, dans un intervalle de temps (INT) déterminé de manière à permettre au second appel de bénéficier de la place du premier appel dans la file d'attente.

2. Procédé selon la revendication 1, dans lequel ledit code est fourni par l'utilisateur lors du second appel.

3. Procédé selon la revendication 1 ou 2, comprenant :
- la transmission (S319) au terminal de l'utilisateur d'un message d'information indiquant à l'utilisateur la possibilité d'effectuer le second appel dans ledit intervalle de temps (INT), tout en bénéficiant de la place du premier appel dans la file d'attente ;
- suite à la réception (S321) d'un message d'approbation en provenance du terminal d'utilisateur, la transmission (S323) au terminal d'utilisateur dudit code d'identification d'utilisateur (CIU) devant être obtenu lors du second appel afin que le second appel puisse bénéficier de la place du premier appel dans la file d'attente.

4. Procédé selon l'une quelconque des revendications 1 à 3, comprenant :
- l'estimation (S311) en fonction de l'état de la file d'attente, pour le premier appel, d'une durée d'attente (DATE) avant mise en relation du terminal d'utilisateur avec un terminal d'opérateur ; et
- si la durée d'attente (DATE) dépasse (S313) une valeur seuil, la transmission (S319) dudit message d'information au terminal d'utilisateur.

5. Procédé selon la revendication 4, dans lequel l'intervalle de temps (INT) pour effectuer le second appel est compris entre l'instant de réception du premier appel (t0) et l'instant (t_{DATE}) correspondant à l'instant de réception du premier appel auquel est ajoutée la durée d'attente estimée (DATE).

6. Procédé selon l'une des revendications 4 ou 5, dans lequel l'intervalle de temps (INT) pour effectuer le second appel est une période fixée de temps, strictement inférieure à la durée d'attente estimée (DATE), pendant laquelle le second appel bénéficiera de la place du premier appel dans la file d'attente.

7. Procédé selon l'une quelconque des revendications 1 à 6, comprenant suite à la réception (S303) du second appel de l'utilisateur :
- la recherche (S325) dans la file d'attente du code d'identification d'utilisateur (CIU) communiqué par l'utilisateur ;
- l'attente (S315) de la mise en relation du terminal d'utilisateur avec un terminal d'opérateur, lorsque la place dans la file d'attente est proche de la tête de la file ;
- la création (S329, S331) d'un second code d'identification de l'utilisateur et placement (S333) du second code en queue de la file d'attente, lorsque le code d'identification de l'utilisateur n'est plus dans la file d'attente.

8. Procédé selon la revendication 7, dans lequel ledit second code d'identification est égal au code d'identification de l'utilisateur.

9. Procédé selon l'une quelconque des revendications 1 à 8, comprenant une action de surveillance (S335) de la file d'attente d'appels d'utilisateurs, au cours de laquelle, si un code d'identification d'utilisateur arrive en tête de file et qu'aucun second appel avec ce code n'a été reçu, une commande parmi les suivantes est exécutée :
- rétrograder le code d'identification dans la file d'attente d'un nombre déterminé de places ;
- placer le code d'identification en queue de file d'attente ;
- supprimer le code d'identification de la file d'attente.

10. Serveur de télécommunications (SVR) destiné à traiter des appels en provenance de terminaux d'utilisateurs via un réseau de télécommunications afin de mettre en relation les terminaux d'utilisateurs avec des terminaux d'opérateurs d'un centre d'appels, ledit serveur étant configuré pour placer un premier appel reçu en provenance d'un terminal d'utilisateur dans une file d'attente lorsqu'aucun terminal d'opérateur n'est disponible pour prendre le premier appel, ledit serveur étant **caractérisé en ce qu'**il comprend une unité de traitement d'appels (250) configurée pour :
- transmettre au terminal de l'utilisateur un code d'identification d'utilisateur (CIU), ledit code étant créé et placé lors du premier appel dans la file d'attente à la place d'un identifiant du premier appel et étant obtenu lors d'un second appel devant être effectué ultérieurement par l'utilisateur, dans un intervalle de temps (INT) déterminé de manière à permettre au second appel de bénéficier de la place du premier appel dans la file d'attente.

11. Serveur selon la revendication 10, dans lequel ledit code est fourni par l'utilisateur lors du second appel.

12. Serveur selon la revendication 10 ou 11, dans lequel ladite unité de traitement d'appels est configurée pour :
- transmettre au terminal de l'utilisateur un message d'information indiquant à l'utilisateur la possibilité d'effectuer le second appel dans ledit intervalle de temps (INT), tout en bénéficiant de la place du premier appel dans la file d'attente ;
- suite à la réception d'un message d'approbation en provenance du terminal d'utilisateur, transmettre au terminal d'utilisateur ledit code d'identification d'utilisateur (CIU) devant être obtenu lors du second appel afin que le second appel puisse bénéficier de la place du premier appel dans la file d'attente.

13. Serveur selon la revendication 12 dans lequel l'unité de traitement est configurée pour mettre en oeuvre un procédé défini selon l'une quelconque des revendications 4 à 10.

14. Programme d'ordinateur mis en oeuvre dans un serveur de télécommunications, ledit programme comprenant des instructions dont l'exécution par un processeur du serveur, provoque l'exécution des étapes d'un procédé selon l'une quelconque des revendications 1 à 9.

15. Terminal de communication apte à réaliser un premier appel vers un centre d'appels (CA), dans lequel est installée une application logicielle adaptée à communiquer avec un serveur de télécommunications (SVR) selon l'une des revendications 10 à 13, ladite application étant configurée pour : - recevoir un code d'identification d'utilisateur (CIU) issu du serveur de télécommunications (SVR) lors du premier appel réalisé vers le centre d'appels (CA) ;
- mémoriser le code d'identification d'utilisateur (CIU) reçu ;
- transmettre ledit code d'identification d'utilisateur (CIU) automatiquement audit serveur (SVR) lors du second appel réalisé par le terminal de communication vers le centre d'appels.

16. Terminal de communication selon la revendication 15, apte à recevoir un message d'information en provenance du serveur de télécommunications (SVR) indiquant à l'utilisateur la possibilité d'effectuer un second appel dans un intervalle de temps (INT), et à transmettre au serveur de télécommunications (SVR) un message d'approbation.

## Patentansprüche

1. Verfahren zum Verarbeiten eines ersten Anrufs, der in einem Call Center (CA) über ein Telekommunikationsnetz (NW1) von einem Benutzerendgerät (TU) empfangen wird, umfassend das Setzen (S309) des ersten Anrufs in eine Warteschlange, wenn kein Operator-Endgerät des Call Centers verfügbar ist, um den ersten Anruf anzunehmen, wobei das Verfahren **dadurch gekennzeichnet ist, dass** es umfasst:
- das Übertragen (S323) eines Benutzeridentifikationscodes (CIU) an das Endgerät des Benutzers, wobei der Code bei dem ersten Anruf erzeugt und anstelle einer Kennung des ersten Anrufs in die Warteschlange gesetzt wird und bei einem zweiten Anruf erhalten wird, der von dem Benutzer später in einem bestimmten Zeitintervall (INT) vorgenommen werden muss, so dass dem zweiten Anruf ermöglicht wird, den Platz des ersten Anrufs in der Warteschlange zu nutzen.

2. Verfahren nach Anspruch 1, wobei der Code von dem Benutzer bei dem zweiten Anruf angegeben wird.

3. Verfahren nach Anspruch 1 oder 2, umfassend:
- das Übertragen (S319) einer Hinweisnachricht an das Endgerät des Benutzers, die dem Benutzer die Möglichkeit nennt, den zweiten Anruf in dem Zeitintervall (INT) vorzunehmen und dabei den Platz des ersten Anrufs in der Warteschlange zu nutzen;
- nach dem Empfangen (S321) einer Genehmigungsnachricht von dem Benutzerendgerät, das Übertragen (S323) des Benutzeridentifikationscodes (CIU) an das Benutzerendgerät, der bei dem zweiten Anruf erhalten werden muss, damit der zweite Anruf den Platz des ersten Anrufs in der Warteschlange nutzen kann.

4. Verfahren nach einem der Ansprüche 1 bis 3, umfassend:
- das Schätzen (S311), in Abhängigkeit von dem Zustand der Warteschlage, einer Wartezeit (DATE) für den ersten Anruf vor dem Verbinden des Benutzerendgeräts mit einem Operator-Endgerät; und
- wenn die Wartezeit (DATE) einen Schwellenwert überschreitet (S313), das Übertragen (S319) der Hinweisnachricht an das Benutzerendgerät.

5. Verfahren nach Anspruch 4, wobei das Zeitintervall (INT) zum Vornehmen des zweiten Anrufs zwischen dem Zeitpunkt des Empfangens des ersten Anrufs (t0) und dem Zeitpunkt (t_{DATE}), der dem Zeitpunkt des Empfangens des ersten Anrufs, zu dem die geschätzte Wartezeit (DATE) hinzugefügt wird, entspricht, enthalten ist.

6. Verfahren nach einem der Ansprüche 4 oder 5, wobei das Zeitintervall (INT) zum Vornehmen des zweiten Anrufs ein feststehender Zeitraum ist, der strikt kleiner als die geschätzte Wartezeit (DATE) ist, während dessen der zweite Anruf den Platz des ersten Anrufs in der Warteschlange nutzt.

7. Verfahren nach einem der Ansprüche 1 bis 6, umfassend, nach dem Empfangen (S303) des zweiten Anrufs des Benutzers:
- das Suchen (S325) des von dem Benutzer übermittelten Benutzeridentifikationscodes (CIU) in der Warteschlange;
- das Abwarten (S315) des Verbindens des Benutzerendgeräts mit einem Operator-Endgerät, wenn der Platz in der Warteschlange nahe dem Kopf der Schlange ist;
- das Erzeugen (S329, S331) eines zweiten Identifikationscodes des Benutzers und Setzen (S333) des zweiten Codes an das Ende der Warteschlange, wenn der Identifikationscode des Benutzers nicht mehr in der Warteschlange ist.

8. Verfahren nach Anspruch 7, wobei der zweite Identifikationscode gleich dem Identifikationscode des Benutzers ist.

9. Verfahren nach einem der Ansprüche 1 bis 8, umfassend eine Aktion des Überwachens (S335) der Warteschlange mit Benutzeranrufen, während der, wenn ein Benutzeridentifikationscode am Kopf der Schlange ankommt und kein zweiter Anruf mit diesem Code empfangen worden ist, einer unter den folgenden Befehlen ausgeführt wird:
- Zurücksetzen des Identifikationscodes in der Warteschlange um eine bestimmte Anzahl von Plätzen;
- Setzen des Identifikationscodes an das Warteschlangenende;
- Löschen des Identifikationscodes aus der Warteschlange.

10. Telekommunikationsserver (SVR), der dazu bestimmt ist, Anrufe von Benutzerendgeräten über ein Telekommunikationsnetz zu verarbeiten, um die Benutzerendgeräte mit Operator-Endgeräten eines Call Centers zu verbinden, wobei der Server dazu ausgestaltet ist, einen von einem Benutzerendgerät empfangenen ersten Anruf in eine Warteschlange zu setzen, wenn kein Operator-Endgerät verfügbar ist, um den ersten Anruf anzunehmen, wobei der Server **dadurch gekennzeichnet ist, dass** er eine Anrufverarbeitungseinheit (250) umfasst, die dazu ausgestaltet ist:
- an das Endgerät des Benutzers einen Benutzeridentifikationscodes (CIU) zu übertragen, wobei der Code bei dem ersten Anruf erzeugt und anstelle einer Kennung des ersten Anrufs in die Warteschlange gesetzt wird und bei einem zweiten Anruf erhalten wird, der von dem Benutzer später in einem bestimmten Zeitintervall (INT) vorgenommen werden muss, so dass dem zweiten Anruf ermöglicht wird, den Platz des ersten Anrufs in der Warteschlange zu nutzen.

11. Server nach Anspruch 10, wobei der Code von dem Benutzer bei dem zweiten Anruf angegeben wird.

12. Server nach Anspruch 10 oder 11, wobei die Anrufverarbeitungseinheit dazu ausgestaltet ist:
- an das Endgerät des Benutzers eine Hinweisnachricht zu übertragen, die dem Benutzer die Möglichkeit nennt, den zweiten Anruf in dem Zeitintervall (INT) vorzunehmen und dabei den Platz des ersten Anrufs in der Warteschlange zu nutzen;
- nach dem Empfangen einer Genehmigungsnachricht von dem Benutzerendgerät an das Benutzerendgerät den Benutzeridentifikationscode (CIU) zu übertragen, der bei dem zweiten Anruf erhalten werden muss, damit der zweite Anruf den Platz des ersten Anrufs in der Warteschlange nutzen kann.

13. Server nach Anspruch 12, wobei die Verarbeitungseinheit dazu ausgestaltet ist, ein nach einem der Ansprüche 4 bis 10 definiertes Verfahren auszuführen.

14. Computerprogramm, das in einem Telekommunikationsserver ausgeführt wird, wobei das Programm Anweisungen umfasst, deren Ausführung durch einen Prozessor des Servers die Ausführung der Schritte eines Verfahrens nach einem der Ansprüche 1 bis 9 bewirkt.

15. Kommunikationsendgerät, das in der Lage ist, einen ersten Anruf an ein Call Center (CA) zu tätigen, und in dem eine Softwareanwendung installiert ist, die geeignet ist, mit einem Telekommunikationsserver (SVR) nach einem der Ansprüche 10 bis 13 zu kommunizieren, wobei die Anwendung dazu ausgestaltet ist: - bei dem ersten getätigten Anruf an das Call Center (CA) einen aus dem Telekommunikationsserver (SVR) hervorgegangenen Benutzeridentifikationscode (CIU) zu empfangen;
- den empfangenen Benutzeridentifikationscode (CIU) zu speichern;
- den Benutzeridentifikationscode (CIU) bei dem zweiten von dem Kommunikationsendgerät getätigten Anruf an das Call Center automatisch an den Server (SVR) zu übertragen.

16. Kommunikationsendgerät nach Anspruch 15, das in der Lage ist, eine Hinweisnachricht von dem Telekommunikationsserver (SVR) zu empfangen, die dem Benutzer die Möglichkeit nennt, einen zweiten Anruf in einem Zeitintervall (INT) vorzunehmen, und eine Genehmigungsnachricht an den Telekommunikationsserver (SVR) zu übertragen.

## Claims

1. Method for handling a first call received in a call centre (CA) via a telecommunications network (NW1), originating from a user terminal (TU), comprising placing (S309) the first call in a queue when no call centre operator terminal is available to take the first call, said method being **characterized in that** it comprises:
- transmitting (S323), to the user's terminal, a user identification code (CIU), said code being created and placed, in the first call, in the queue in place of an identifier of the first call and being obtained in a second call that has to be made subsequently by the user, within a determined time interval (INT), so as to allow the second call to benefit from the place of the first call in the queue.

2. Method according to Claim 1, wherein said code is provided by the user in the second call.

3. Method according to Claim 1 or 2, comprising:
- transmitting (S319), to the user's terminal, an information message indicating to the user the possibility of making the second call within said time interval (INT), while benefiting from the place of the first call in the queue;
- following the receipt (S321) of an approval message from the user terminal, transmitting (S323), to the user terminal, said user identification code (CIU) that has to be obtained in the second call so that the second call is able to benefit from the place of the first call in the queue.

4. Method according to any one of Claims 1 to 3, comprising:
- estimating (S311), based on the state of the queue, for the first call, a waiting time (DATE) before the user terminal is put through to an operator terminal; and
- if the waiting time (DATE) exceeds (S313) a threshold value, transmitting (S319) said information message to the user terminal.

5. Method according to Claim 4, wherein the time interval (INT) for making the second call is between the time of receipt of the first call (t0) and the time (t_{DATE}) corresponding to the time of receipt of the first call plus the estimated waiting time (DATE).

6. Method according to either of Claims 4 and 5, wherein the time interval (INT) for making the second call is a fixed period of time, strictly less than the estimated waiting time (DATE), during which the second call will benefit from the place of the first call in the queue.

7. Method according to any one of Claims 1 to 6, comprising, following the receipt (S303) of the second call from the user:
- searching (S325) in the queue for the user identification code (CIU) communicated by the user;
- waiting (S315) for the user terminal to be put through to an operator terminal when the place in the queue is close to the front of the queue;
- creating (S329, S331) a second user identification code and placing (S333) the second code at the back of the queue when the user identification code is no longer in the queue.

8. Method according to Claim 7, wherein said second identification code is the same as the user identification code.

9. Method according to any one of Claims 1 to 8, comprising an action of monitoring (S335) the user call queue, in which, if a user identification code reaches the front of the queue and no second call with this code has been received, one of the following commands is executed:
- demote the identification code in the queue by a determined number of places;
- place the identification code at the back of the queue;
- remove the identification code from the queue.

10. Telecommunications server (SVR) intended to handle calls originating from user terminals via a telecommunications network in order to put the user terminals through to operator terminals of a call centre, said server being configured to place a first call received from a user terminal in a queue when no operator terminal is available to take the first call, said server being **characterized in that** it comprises a call handling unit (250) configured to:
- transmit, to the user's terminal, a user identification code (CIU), said code being created and placed, in the first call, in the queue in place of an identifier of the first call and being obtained in a second call that has to be made subsequently by the user, within a determined time interval (INT), so as to allow the second call to benefit from the place of the first call in the queue.

11. Server according to Claim 10, wherein said code is provided by the user in the second call.

12. Server according to Claim 10 or 11, wherein said call handling unit is configured to:
- transmit, to the user's terminal, an information message indicating to the user the possibility of making the second call within said time interval (INT), while benefiting from the place of the first call in the queue;
- following the receipt of an approval message from the user terminal, transmit, to the user terminal, said user identification code (CIU) that has to be obtained in the second call so that the second call is able to benefit from the place of the first call in the queue.

13. Server according to Claim 12, wherein the handling unit is configured to implement a method defined according to any one of Claims 4 to 10.

14. Computer program implemented in a telecommunications server, said program comprising instructions the execution of which by a processor of the server causes the execution of the steps of a method according to any one of Claims 1 to 9.

15. Communication terminal able to make a first call to a call centre (CA) and in which there is installed a software application designed to communicate with a telecommunications server (SVR) according to one of Claims 10 to 13, said application being configured to: -
receive a user identification code (CIU) from the telecommunications server (SVR) in the first call made to the call centre (CA);
- store the received user identification code (CIU);
- transmit said user identification code (CIU) automatically to said server (SVR) in the second call made by the communication terminal to the call centre.

16. Communication terminal according to Claim 15, able to receive an information message from the telecommunications server (SVR) indicating to the user the possibility of making a second call within a time interval (INT), and to transmit an approval message to the telecommunications server (SVR).
